# EUROPEAN PATENT SPECIFICATION

(11) **EP 2 541 404 B1**
(45) Date of publication and mention of the grant of the patent: **13.08.2014**
(21) Application number: 11005362.6
(22) Date of filing: 30.06.2011
(51) Int. Cl.: G06F 9/48, G06F 12/08

(54) **Technique for task sequence execution**
Technik zur Arbeitssequenzausführung
Technique pour l'exécution de séquence de tâche

(43) Date of publication of application: 02.01.2013
(73) Proprietor: Telefonaktiebolaget LM Ericsson (publ), 164 83 Stockholm (SE)
(72) Inventor: Varshney, Deepak, Bangalore 560037 (IN)
(74) Representative: Åkerman, Mårten Lennart

(56) References cited:
- WO-A2-2009/120479
- US-A1- 2005 066 132
- Anonymous: "Altera NI52007-7.2.0 Chpter 9: Cache and Tightly-Coupled Memory", , 1 January 2007 (2007-01-01), XP55013733, Retrieved from the Internet: URL:http://www.ict.kth.se/courses/IL2207/0 708/docs/n2sw_nii52007.pdf [retrieved on 2011-12-01]

## Description

### Technical Field

The present disclosure generally relates to the technical field of computing systems. In particular, the present disclosure relates to a technique of executing a task sequence on a computing system comprising a multiple task processor having an on-chip memory and further comprising an external memory connected to the multiple task processor.

### Background

Many embedded systems, especially embedded systems used for multimode wireless communication devices, comprise a fast multiple task processor such as a Digital Signal Processor (DSP) that is capable of executing multiple tasks at a very high speed. The multiple task processor is used as an accelerator to speed up algorithms that require regular processing. A set of instructions for the multiple task processor is called a program which, alone or together with other programs, carries out a task (e.g., a function) when executed on the multiple task processor. The program is stored in a program memory. The execution of the program may require constant data and variable data which are typically stored in an optional data memory.

To allow high program execution speeds, the program memory and the data memory are often realized as on-chip program memory and an on-chip data memory (in the following also summarized as "on-chip memory") of the multiple task processor since executing programs from an external memory increases the execution time of the programs. While the on-chip memory allows the core of the multiple task processor to have high speed access, the size of the on-chip memory is typically limited. Thus, if several tasks have to be carried out by the multiple task processor, it is often the case that the size of the on-chip memory is not large enough to store the programs (and the data) for all tasks at the same time.

In order to overcome this drawback, programs and data for all tasks may initially be stored in an external memory which is slow in access but large in size. Before a task is executed, the programs and data corresponding to the task to be executed are transferred from the external memory into the on-chip memory of the multiple task processor, typically using Direct Memory Access (DMA). A control processor in the embedded system may control this transfer process (e.g., ensure that the programs and data needed to execute a task have been properly loaded into the on-chip memory of the multiple task processor before the multiple task processor is asked to execute the task).

When using an external memory, it may happen that program download times are larger than execution times of the downloaded programs, thereby deteriorating performance characteristics of the computing system. Also, using an external memory introduces a lot of traffic on the memory bus which leads to significant power dissipation. For obvious reasons, power dissipation should be avoided as much as possible in embedded systems, especially in mobile handsets.

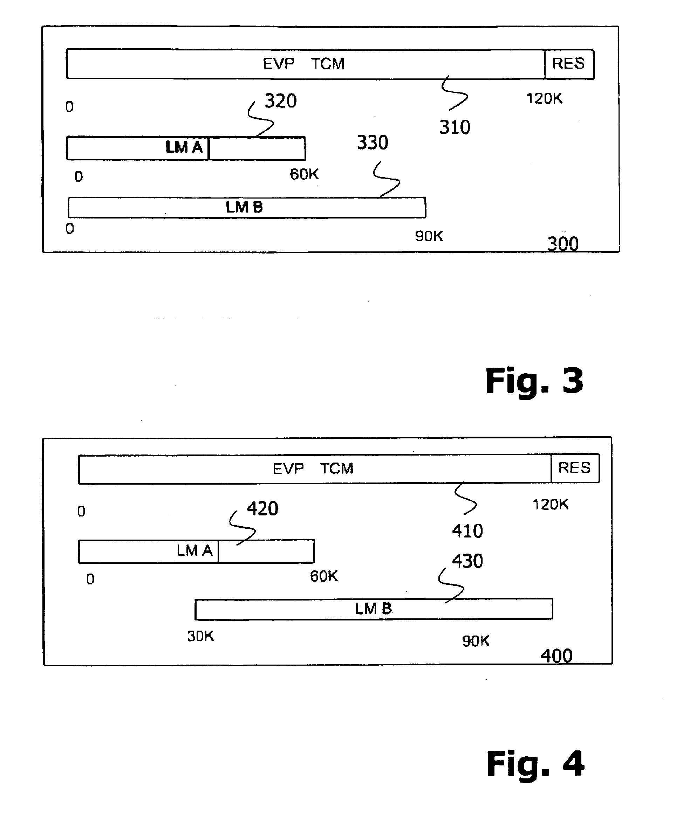

Fig. 3 shows schematically how programs and data needed to execute tasks are stored within an on-chip memory 300 in existing computing systems which comprise a multiple task processor having an on-chip memory and which further comprise an external memory connected to the multiple task processor. The on-chip memory 300 has an exemplary memory capacity of 120KB as indicated by reference numeral 310. In Fig. 3, programs and data needed to execute task A are referred to as load module A. Programs and data needed to execute task B are referred to as load module B. The memory size of load module A is 60KB, and its location within the on-chip memory 300 is indicated by reference numeral 320, whereas the memory size of load module B is 90KB, and its location within the on-chip memory 300 is indicated by reference numeral 330.

Since the memory capacity of the on-chip memory 300 is not large enough to store both load module A and load module B completely at the same time, load module A is overlaid with load module B. Here, it is assumed that each load module is copied such into the on-chip memory 300 that the memory start address of each load module respectively coincides with the memory start address of the on-chip memory 300 (here: start address 0). As a consequence, load module A is completely overwritten by load module B when load module B is copied into the on-chip memory 300 after having copied load module A into the on-chip memory 300, and load module B is partly overwritten by load module A when load module A is copied into the on-chip memory 300 after having copied load module B into the on-chip memory 300.

Thus, if the multi task processor is asked to execute one of load modules A or B, most likely at most a part of the corresponding load module data will be available in the on-chip memory. Therefore, in existing solutions, there is the strategy to always copy the complete load module into the on-chip memory before executing the load module. As a consequence, download times and energy consumption needed for the downloading processes of the load modules are significant.

Document US 2005/066132 A1 discloses a processor having an on-chip memory which is managed by a cache controller, and an external memory. Instructions retrieved from the external memory are cached in the on-chip memory before they are executed by the processor.

Document WO 2009/120479 A2 discloses a tightly coupled memory system, in particular a processor having an on-chip memory which is managed by a cache controller, and an external memory. Instructions retrieved from the external memory are cached in the on-chip memory before they are executed by the processor.

### Summary

A need arises to reduce at least one of download times and energy consumption in a computing system which comprises a multiple task processor having an on-chip memory and which further comprises an external memory connected to the multiple task processor.

According to a first aspect, a method for executing a task sequence on a system comprising a multiple task processor having an on-chip memory and an external memory connected to the multiple task processor is provided. The method comprises transferring load module data from the external memory into the on-chip memory in order to generate a load module sequence within the on-chip memory, wherein a load module includes at least one of a program and data to be processed by the program. The generation of a load module of the load module sequence comprises the following processes: determining, based on respective start addresses and end addresses of the load modules of the load module sequence, based on a respective first indicator indicating whether the load module has already been completely loaded at least once into the on-chip memory, and based on a respective second indicator indicating whether at least a part of the load module, after having been completely loaded into the on-chip memory, is currently overwritten, which parts of the load module are currently stored within the on-chip memory, and transferring only load module data from the external memory into the on-chip memory for parts of the load module which are currently not stored within the on-chip memory. The load module is completely loaded into the on-chip memory if the first indicator is in a FALSE state, the load module is partly loaded into the on-chip memory if the first indicator is in a TRUE state and the second indicator is in a FALSE state, and no part of the load module is loaded into the on-chip memory if the first indicator and the second indicator are respectively in a TRUE state, wherein each load module of the load module sequence is generated within an individual address range of the on-chip memory which is chosen in dependence on the load module sequence. The method further comprises executing the task sequence by running the load module sequence.

In certain realizations, choosing an individual address range of the on-chip memory in dependence on the load module sequence may comprise choosing an individual address range in dependence on a parameter or a set of parameters which characterizes the load module sequence. Such load module sequence characterizing parameters may for example include at least one of the size and the order of the load modules, but the technique presented herein is not restricted to these parameters. For example, a load module sequence characterizing parameter may also include the number of load module downloading cycles of a repeating pattern of the load module sequence, or the like.

The address ranges of the load modules of the load module sequence may be chosen in various ways. As an example, the load modules may be chosen such that the amount of load module data transferred from the external memory into the on-chip memory is reduced (e.g., minimized).

There exist many strategies for generating each load module of the load module sequence within an individual address range of the on-chip memory which is chosen in dependence on the load module sequence. Several exemplary strategies will now be discussed in more detail.

For example, at least one of start addresses and end addresses of the address ranges of the load modules may be chosen depending on one or both of the size of the load modules and the order according to which the load modules are generated within the on-chip memory. In this way, very short (average) load module download times can be obtained. Additionally, or as an alternative, at least one of start addresses and end addresses of the load modules within the on-chip memory may be chosen such that as much address range of the on-chip memory as possible is covered by the load modules.

As a further additional or alternative measure, at least one of start addresses and end addresses of the load modules within the on-chip memory may be chosen such that, in case that the sum of the data lengths of the load modules already generated within the on-chip memory is smaller than the total data size of the on-chip memory, the address ranges of load module data of different load modules do not overlap with each other. Moreover, in case that the sum of the data lengths of the load modules already generated within the on-chip memory is larger than the total data size of the on-chip memory, the whole address range of the on-chip memory may be covered by load module data of the load modules. In this way, it may in certain implementations be ensured that as much address range as possible is covered by the load modules (thus shortening the download times).

Load modules may be successively generated within the on-chip memory. In this regard, a start address assigned to a load module currently generated within the on-chip memory may be located immediately after the end address of a load module previously generated. As soon as the sum of the data lengths of the load modules already generated within the on-chip memory and of a further load module to be generated exceeds the total data size of the on-chip memory, an end address may be assigned to the further load module which coincides with the highest address of the on-chip memory. In such a realization, a start address assigned to a first load module generated within the on-chip memory may coincide with the lowest address of the on-chip memory.

Determining which parts of the load module are currently stored within the on-chip memory and/or which module data is to be downloaded may be at least partly controlled by the multiple task processor. The multiple task processor may be a Digital Signal Processor.

According to a second aspect, a computer program product is provided comprising program code portions for performing any one of the above described embodiments when the computer program product is executed on a computing device. The computing device may comprise at least one of the multiple task processor and a dedicated control processor. Further, a computer-readable recording medium storing the computer program product is provided. The computer-readable recording medium may take the form of a semiconductor memory, a CD-ROM or DVD. Still further, the computer program product may be provided for download onto such a computer-readable medium (e.g., via a network connection).

According to a another aspect, a computing system comprising a multiple task processor having an on-chip memory and further comprising an external memory connected to the multiple task processor is provided. The computing system is adapted to transfer load module data from the external memory into the on-chip memory in order to generate a load module sequence within the on-chip memory, wherein a load module includes at least one of a program and data to be processed by the program. The generation of a load module of the load module sequence comprises the following processes: determining, based on respective start addresses and end addresses of the load modules of the load module sequence, based on a respective first indicators indicating whether the load module has already been completely loaded at least once into the on-chip memory, and based on a respective second indicator indicating whether at least a part of the load module, after having been completely loaded into the on-chip memory, is currently overwritten, which parts of the load module are currently stored within the on-chip memory, and transferring only load module data from the external memory into the on-chip memory for parts of the load module which are currently not stored within the on-chip memory. The load module is completely loaded into the on-chip memory if the first indicator is in a FALSE state, the load module is partly loaded into the on-chip memory if the first indicator is in a TRUE state and the second indicator is in a FALSE state, and no part of the load module is loaded into the on-chip memory if the first indicator and the second indicator are respectively in a TRUE state. The computing system is further adapted to execute the task sequence by executing the load module sequence, and adapted to generate each load module of the load module sequence within an individual address range of the on-chip memory which is chosen in dependence on the load module sequence.

The computing system may be adapted to choose the address ranges of the load modules of the load module sequence such that the amount of load module data transferred from the external memory into the on-chip memory is minimized. As an additional or alternative measure, the computing system may be adapted to choose at least one of start addresses and end addresses of the address ranges of the load modules depending on one or both of the size of the load modules and the order according to which the load modules are generated within the on-chip memory. At least one of start addresses and end addresses of the load modules within the on-chip memory may also be chosen such that as much address range of the on-chip memory as possible is covered by the load modules.

The computing system may be adapted to choose at least one of start addresses and end addresses of the load modules within the on-chip memory such that, in case that the sum of the data lengths of the load modules already generated within the on-chip memory is smaller than the total data size of the on-chip memory, the address ranges of load module data of different load modules do not overlap with each other. Additionally, or in the alternative, the computing system may be adapted such that, in case that the sum of the data lengths of the load modules already generated within the on-chip memory is larger than the total data size of the on-chip memory, the whole address range of the on-chip memory is covered by load module data of the load modules.

The computing system may be adapted to successively generate load modules within the on-chip memory, wherein a start address assigned to a load module currently generated within the on-chip memory is located immediately after the end address of a load module previously generated. As soon as the sum of the data lengths of the load modules already generated within the on-chip memory and of a further load module to be generated exceeds the total data size of the on-chip memory, an end address may be assigned by the computing system to the further load module which coincides with the highest address of the on-chip memory. Specifically, a start address assigned to a first load module generated within the on-chip memory may coincide with the lowest address of the on-chip memory.

The multiple task processor may be adapted to at least partly control which parts of the load modules are currently stored within the on-chip memory and/or which kind of module data is to be downloaded. Such a control task may alternatively be performed by a dedicated control processor or partly by the multiple task processor and partly by the control processor. Adapting the multiple task processor to at least partly control which parts of the load modules are currently stored within the on-chip memory and/or which kind of module data is to be downloaded makes it possible to reduce the computational load of the dedicated control processor and to use knowledge for optimizing load module downloads which may be available for the multiple task processor only.

A multiple task processor comprising an on-chip memory connectable to an external memory may also be provided, the multiple task processor comprising functionality to control the transfer of load module data from the external memory into the on-chip memory in order to generate a load moduie sequence within the on-chip memory, wherein the generation of a load module of the load module sequence is controlled based on determining which parts of the load module are currently stored within the on-chip memory, and initiating/controlling the transfer of only load module data from the external memory into the on-chip memory for parts of the load module which are currently not stored within the on chip memory. The multiple task processor may further comprise functionality to execute the task sequence by running the load module sequence, and to control the generation of the load module sequence such that each load module is generated within an individual address range of the on-chip memory which is chosen in dependence on the load module sequence.

### Brief description of the drawings

In the following, the present disclosure will be described in more detail with reference to exemplary embodiments illustrated in the drawings, wherein
Fig. 1: is a schematic block diagram illustrating an embodiment of a computing system;
Fig. 2: is a flow chart illustrating a method embodiment of executing a task sequence;
Fig. 3: is a schematic drawing illustrating an exemplary on-chip memory usage scheme;
Fig. 4: is a schematic drawing illustrating an embodiment of an on-chip memory usage scheme;
Figs. 5A and B: depict a table comparing different realizations of executing a task sequence;
Fig. 6: is a schematic drawing illustrating an example of an on-chip memory usage scheme;
Fig. 7: is a schematic drawing illustrating an embodiment of an on-chip memory usage scheme;
Fig. 8: is a schematic drawing illustrating another embodiment of an on-chip memory usage scheme;
Fig. 9: is a schematic drawing illustrating an example of an on-chip memory usage scheme;
Fig. 10: is a schematic drawing illustrating an embodiment of an on-chip memory usage scheme;
Fig. 11: is a table comparing different on-chip memory usage schemes;
Fig. 12: is a flow chart illustrating another embodiment of transferring load module data into an on-chip memory;
Fig. 13: is a table illustrating details of an embodiment of executing a task sequence;
Fig. 14: is a table illustrating an embodiment of a load module;
Fig. 15: is a table illustrating an embodiment of a task table used when executing different tasks; and
Fig. 16: is a schematic time diagram illustrating differences between different task sequence execution approaches.

### Detailed description

In the following description, for purposes of explanation and not limitation, specific details are set forth, such as specific device and system configurations and specific methods, steps and functions, in order to provide a thorough understanding of the technique presented herein. It will be appreciated that this technique may be practiced in other embodiments that depart from these specific details.

Those skilled in the art will further appreciate that the methods, steps and functions described herein may be implemented using individual hardware circuitry, using software functioning in conjunction with a programmed microprocessor or general purpose computer, using one or more Application Specific Integrated Circuits (ASICs), one or more DSPs and/or one or more Field Programmable Gate Arrays (FPGAs). It will also be appreciated that the technique disclosed herein may be embodied in a processor and a memory coupled to the processor, wherein the memory stores one or more programs that perform the methods, steps and functions described herein when executed by the processor.

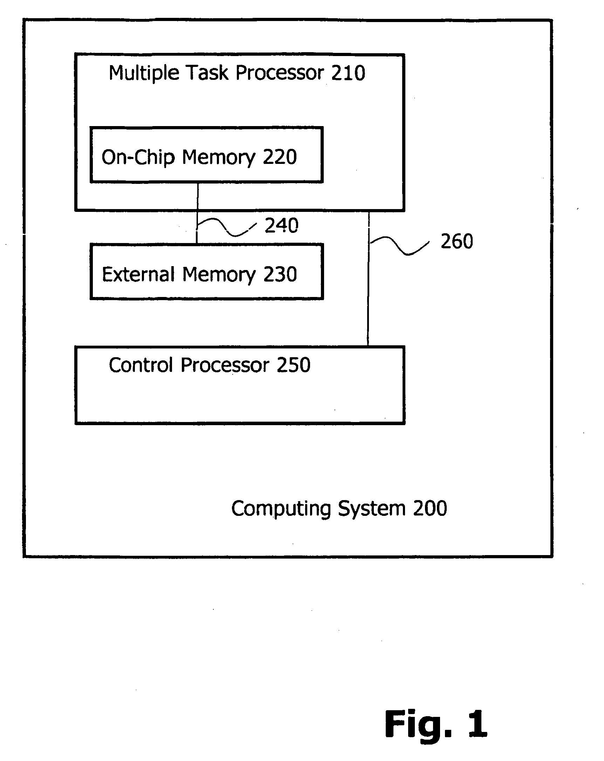

Fig. 1 is a schematic block diagram illustrating an embodiment of a computing system 200. The computing system 200 may be part of a portable device, such as a mobile telephone, a smartphone, a network or data card, or a portable computer. The computing system 200 may be an embedded system like a multi-standard mobile chipset and may optionally be realized using one or more ASICs.

As show in Fig. 1, the computing system 200 comprises a multiple task processor 210 having an on-chip memory 220 and an external memory 230 that may be located on a chip different from the chip comprising the multiple task processor 210. The external memory 230 is connected to the multiple task processor 210 via a data connection 240. The data connection 240 may be realized as a data bus, but could in alternative embodiments also be implemented otherwise.

The computing system 200 is adapted (e.g., under control of a computer program product) to transfer load module data from the external memory 230 into the on-chip memory 220 in order to generate a load module sequence within the on-chip memory 220. The generation of a load module of the load module sequence comprises the following processes: determining which parts of the load module are currently stored within the on-chip memory 220, and transferring only load module data from the external memory 230 into the on-chip memory 220 for parts of the load module which are currently not stored within the on-chip memory 220. The computing system 200 is further adapted (e.g., by appropriate control of the multiple task processor 210) to execute the task sequence by running the load module sequence. The computing system 200 generates each load module of the load module sequence within an individual address range of the on-chip memory 220 which is chosen in dependence on the load module sequence. Various embodiments for choosing the individual address ranges will be discussed in more detail below.

The computing system 200 optionally comprises a controi processor 250 which is responsible for loading or initiating loading of the right load module before it is executed. The control processor 250 is coupled to the multiple task processor 210 via a command line 260 or otherwise. The control processor 250 may be realized as or comprise a memory controller.

In order to reduce the complexity of the control processor 250, the responsibility of downloading the load module before it is executed may be shared between the control processor 250 and the multiple task processor 210. For example, the multiple task processor 210 may be capable of starting and controlling a download of load module data from the external memory 230 into its on-chip program/data memory 220 on its own. The control processor 250 may for example ask the multiple task processor 210 to download a complete load module (via a task or a command), but the processor 210 may decide whether a download is actually needed or not, or whether only a part of the load module which has been demanded by the control processor 250 needs to be downloaded or the complete load module, and initiate corresponding actions. In other words: The actions performed by the multiple task processor 210 may not fully correspond to the commands received from the control processor 250 depending on what load module data is already stored within the on-chip memory 220. This relieves the control processor 250 of the responsibility of low level memory management of the digital signal processor (multiple task processor 210) which can become complex in embedded systems where the multiple task processor 210 typically executes asynchronously.

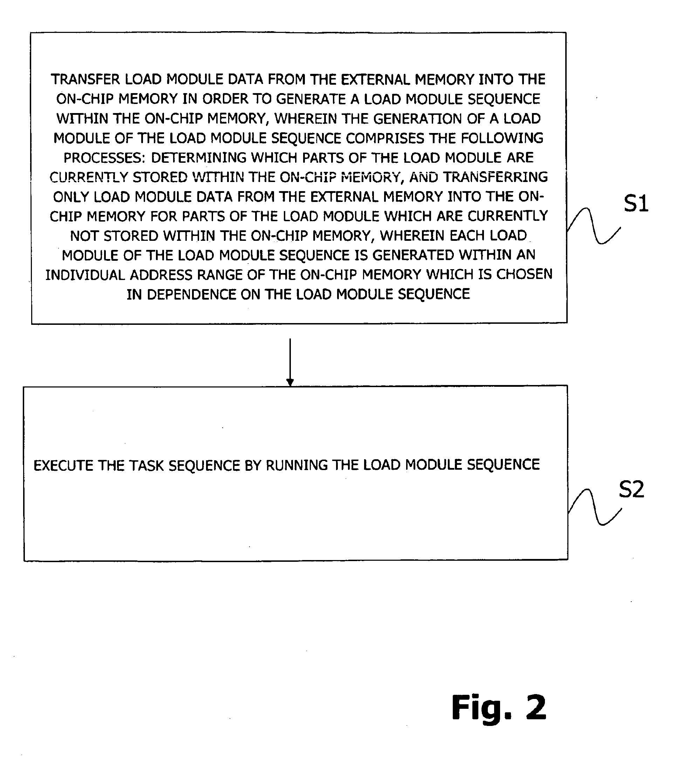

Fig. 2 shows a flow chart illustrating an embodiment of executing a task on a system comprising a multiple task processor having an on-chip memory and further comprising an external memory connected to the multiple task processor (e.g., as shown in Fig. 1). In an optional initial step (not shown), it is determined which parts of a load module are currently stored within the on-chip memory. Then, in step S1, only load module data is transferred from the external memory into the on-chip memory for parts of the load module which are currently not stored within the on-chip memory. The load module is generated within an individual address range of the on-chip memory which is chosen in dependence on a load module sequence to be generated within the on-chip memory in accordance with a task sequence to be executed. In step S2, the task is executed by running the load module.

An advantage of the embodiments illustrated in Figs. 1 and 2 is the fact that, compared to other solutions, the download volume can be decreased. This decrease in download volume leads to lower download times, hence resulting in earlier availability of the result of the tasks, and significant less power consumption. As a consequence, it becomes for example possible to power down the multiple task processor into a low-power dissipation mode or to clock the multiple task processor at a lower -speed leading to lesser power consumption in general.

In certain embodiments, generating a load module sequence within the on-chip memory may in particular include the following: in many cases, depending on the number and sizes of load modules and the size of the on-chip memory, some of the load modules may be stored fully, some of the load modules may be stored partly, and some of the load modules may not be stored at all at a given time instance in the on-chip memory. On the other hand, the task sequence to be executed may imply a corresponding load module sequence to be run by the multiple task processor and therefore to be available in the on-chip memory. Thus, in order to execute the task sequence, load modules may successively be restored (the term "restored" may include: complete the load module by download the missing parts if only a part of the load module is currently stored; fully reload load module if no part of the load module is currently stored; no download if the load module is already fully stored) in the on-chip memory in a unique order implied by the task sequence. In this sense, generating a load module sequence within the on-chip memory may include restoring load modules in the on-chip memory in a unique order implied by the task sequence to be executed.

In certain embodiments, the individual address range may in particular include the following: for each load module it may be individually determined which load module start address and which load module end address are preferable in order to decrease the load module download volume. This aspect also includes the case that start addresses or end addresses for different load modules are identical if this nevertheless leads to an overall decrease of the load module download activity.

In certain embodiments, the on-chip program memory and the on-chip data memory of the digital signal processor (multiple task processor 210) are separate memories. In this case, execution of a task will require the download of separate load modules for both data memory (data load modules) and program memory (memory load modules). This means that embodiments of the invention may be applied to downloading data load modules or downloading memory load modules or downloading both data ioad modules and memory ioad modules. In some machine architectures, the program memory and the data memory are condensed into one single memory ("mixed memory"). In this case, a "common" load module may be used for downloading both types of data into the mixed memory. Embodiments are equally applicable to both cases.

Fig. 4 shows an embodiment of placing load modules in an on-chip memory 400 having a memory capacity of 120KB as indicated by reference numeral 410. The program/data corresponding to a task A is referred to as load module A. The program/data corresponding to a task B is referred to as load module B. As understood herein, the term "program/data" includes at least one of a set of instructions (i.e., a program) and data to be processed by the program (e.g., constants or variables).

As illustrated in Fig. 4, the memory size of load module A is 60KB, indicated by reference numeral 420, and the memory size of load module B is 90KB, indicated by reference numeral 430. Since the memory capacity of the on-chip memory 300 is not large enough to store both load module A and load module B completely at a time, load module A is overlaid with load module B. In contrast to the embodiment shown in Fig. 3, each load module is copied such into the on-chip memory 400 that the start addresses of the load modules A and B differ from each other. That is, the start address of module A is 0KB (i.e., coincides with the start address of the on-chip memory 400), whereas the start address of module B is 30KB. Due to the start address of module B of 30KB, the end address of module B is 120KB (i.e., coincides with the end address of the on-chip memory 400). As a consequence, compared to the embodiment shown in Fig. 3, load module A is only partly overwritten by load module B if load module B is copied into the on-chip memory 400 after having copied load module A into the on-chip memory 400. Further, compared to the embodiment shown in Fig. 3, load module B is overwritten by load module A to a lower extent if load module A is copied into the on-chip memory 400 after having copied load module B into the on-chip memory 400. These effects result from the fact that the overlapping range between load module A and load module B is reduced, compared to the overlapping range in the embodiment shown in Fig. 3.

If only two load modules are stored within the on-chip memory at one cycle, every load module may be classified either by START_LEFT (start address of the load module is 0) or by END_RIGHT (end address of load module is end address of on-chip memory 220). For example, in Fig. 4, load module A could be classified of the type STAR T LEF T and load module B could be classified of the type END_RIGHT.

In order to bring out the difference between the on-chip memory handling shown in Fig. 3 and the on-chip memory handling shown in Fig. 4 more clearly, some theoretical considerations will be given in the following. In these considerations, the total memory size of the on-chip memory is denoted by S_Totat, the size of load module A by S_A, and the size of load module B by S_B. Also, it is assumed that S_A + S_B > S_Total (i.e., the on-chip memory is not large enough to simultaneously store load module A and load module B).

In a first scheme (scheme A), that may be based on the memory usage scheme illustrated in Fig. 3, load module A is loaded completely, and then the programs included within load module A are executed. Then, load module B is loaded completely, and the programs included within load module B are executed. Thus, load module data having a total size of S_A+S_B is downloaded within one cycle. Without loss of generality it is assumed that S_B > S_A and load module A is executed before load module B.

In a second scheme (scheme B) that may also be based on the memory usage scheme illustrated in Fig. 3, at the first time when load module A is needed, load module A is fully downloaded and then executed. After this, at the first time when load module B is needed, load module B is fully downloaded and then executed. Subsequently, only the intersecting parts of load modules A and B are downloaded, but not the complete load modules A and B.

Assuming that between load module switches (i.e., between the execution of load module A and the execution of load module B) only corrupted parts (i.e., intersecting parts) of the load modules are repaired by download, the size of the downloaded load module data at each switch can be reduced to min(S_A, S_B). Since this will happen twice (before load module A is executed and before load module B is executed), the total size of the downloaded load module data is 2* min(S_A, S_B). It can be proven that for S_A + S_B> S_Total, S_A + S_B is always greater than or equal to 2* min(S_A, S_B). Thus, it follows that scheme B is always more efficient than scheme A.

In scheme A and scheme B, it has been assumed that all load modules have the same start address within the on-chip memory. In a more optimized scheme (scheme C), that may be based on the memory usage scheme illustrated in Fig. 4, instead of overlaying the load modules by using the same start address, the start address of load module A is aligned to be 0 (i.e., coincides with the start address of the on-chip memory), and the end address of load module B is shifted towards the end address of the on-chip memory such that the overlap between load module A and load module B is decreased or minimized. Assuming that between load module switches only corrupted parts are repaired, the size of the download volume at a load module switch reduces to (S_A + S_B - S-total). It can be verified that (S_A + S_B - S_Total) is always lower than or equal to 2*min(S_A, S_B). That is, by choosing different start addresses for load modules A and B, the size of the load module data that is downloaded at each load module switch can be further reduced.

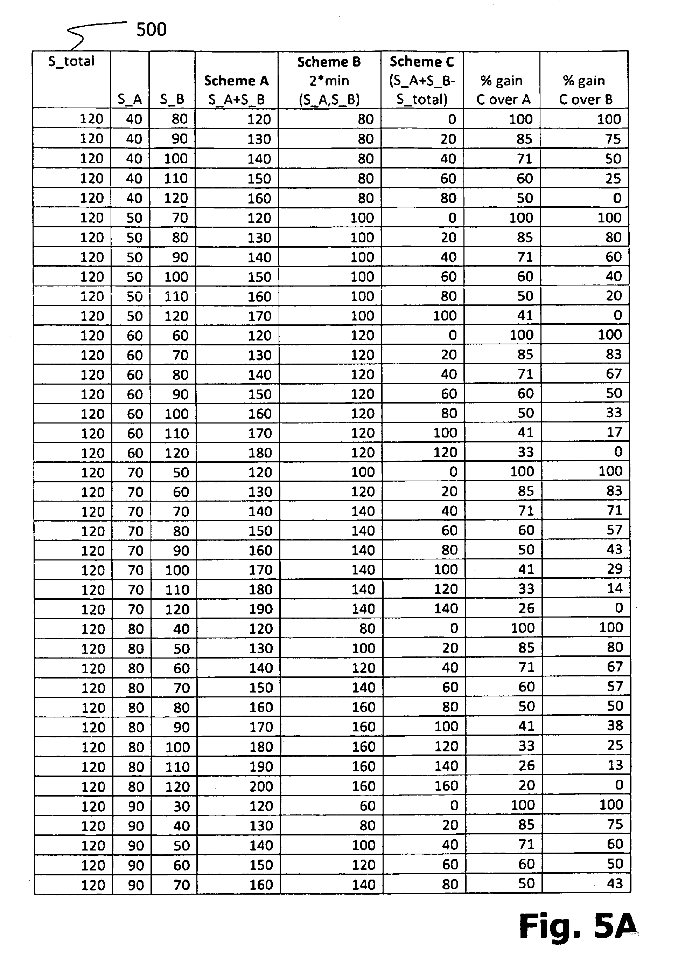

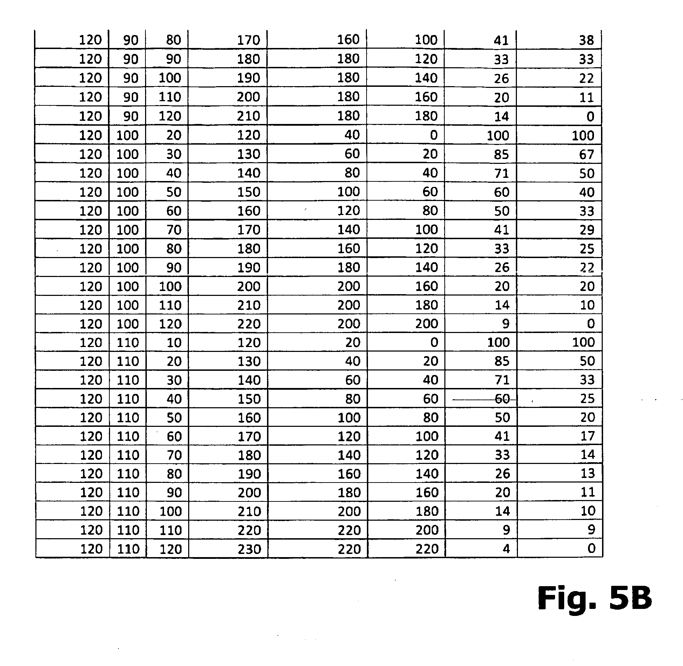

Figs. 5A and 5B show, based on some exemplary numbers for S_A, S_B and S_Total, a comparison of the respective performance of schemes A, B and C as described above. As can be derived from Figs. 5A and 5B, scheme C has the best performance.

Scheme C may take into account scheduling patterns (i.e., the number of different load modules which are executed by the multiple task processor within a particular period of time and the order in which different load modules are executed by the multiple task processor during this period of time). If the number and order of the load modules is known, the location of the respective start addresses and end addresses of the load modules can be chosen such that the overlap between the load modules is minimized.

An optimized arrangement can be obtained by comparing all the possible options against each other. Since the number of load modules within a scheduling period is typically limited, and also since the scheduling sequence of the load modules may be known a priori, comparing all the possible options against each other is not complex. The optimized arrangement may be set at the time of linking the code, and not in runtime, hence even if this process should be complex, it can be performed at the time of designing the system.

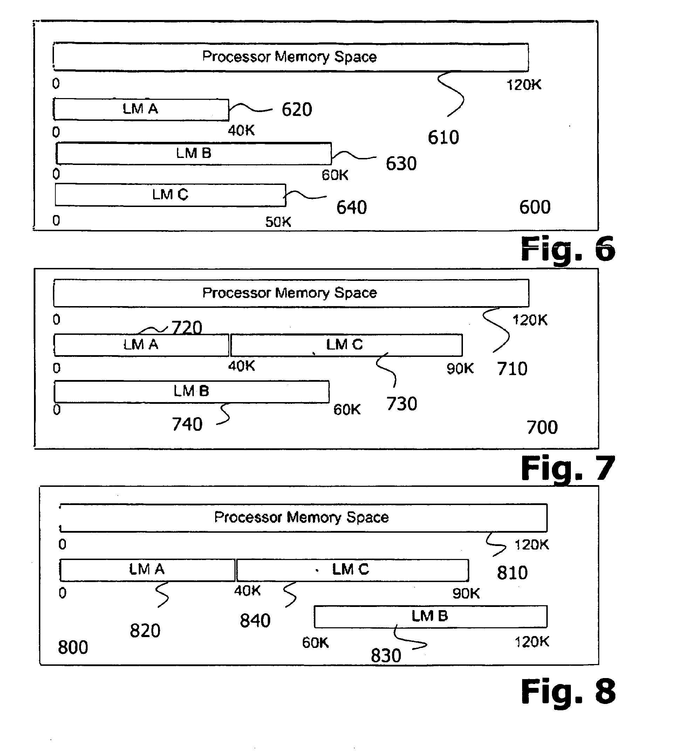

In the foregoing embodiments, it has been assumed that the number of different load modules is 2 (load module A, load module B). However, schemes A, B, and C may also be applied to cases where an arbitrary number of load modules used, which will become apparent while making reference to Figs. 6 to 11. In this context, it should be noted that in most embedded systems where a DSP is used as the multiple task processor (see reference numeral 210 in Fig. 1), the number of ioad modules is limited to a few (e.g., to 4-5) when considering one scheduling period (cycle). Here, the case is considered where 3 different load modules are used. The analysis can be divided into two cases:
1) The sum of the memory sizes of any 2 load modules out of 3 load modules is less than the total memory size of the on-chip memory; and
2) The sum of the memory sizes of none of 2 load modules out of 3 load modules is less than the total memory size of the on-chop memory.

In the first alternative (sum of 2 out of 3 load modules is less than the total memory size), as an example the case is considered where 3 load modules are needed (in this order) in a scheduling period (or cycle): load module A (size 40KB), load module B (size 60KB), and load module C (size 50KB).

Fig. 6 shows a conventional approach of storing load modules within an on-chip memory 600 similar to scheme A illustrated in Fig. 3. The on-chip memory 600 has a memory capacity of 120KB as indicated by reference numeral 610. The program/data corresponding to a task A is referred to as load module A. The program/data corresponding to a task B is referred to as load module B. The program/data corresponding to a task C is referred to as load module C. The location of load module A within the on-chip memory 600 is indicated by reference numeral 620, the location of load module B within the on-chip memory 600 is indicated by reference numeral 630, the location of load module C within the on-chip memory 600 is indicated by reference numeral 640. Here, it is assumed that each load module is copied such into the on-chip memory 600 that a memory start address of the load module always coincides with the memory start address of the on-chip memory 600 (here: start address 0).

After having downloaded load module A, load module B, and load module C in this order (initialization period), switching from load module A to load module B requires downloading 50KB, switching from load module B to load module C requires downloading 50KB, and switching from load module C to load module A requires downloading 40KB. Thus, a total load module data of 140KB is needed for one cycle (e.g., one scheduling period).

Fig. 7 shows an embodiment of storing load modules within an on-chip memory 700. The on-chip memory 700 has a memory capacity of 120KB as indicated by reference numeral 710. The program/data corresponding to a task A is referred to as load module A. The program/data corresponding to a task B is referred to as load module B. The program/data corresponding to a task C is referred to as load module C. The location of load module A within the on-chip memory 700 is indicated by reference numeral 720, the location of load module B within the on-chip memory 700 is indicated by reference numeral 730, the location of load module C within the on-chip memory 700 is indicated by reference numeral 740.

Here, it is assumed that load module A is copied such into the on-chip memory 700 that a memory start address of load module A always coincides with the memory start address of the on-chip memory 700 (here: start address 0). Load module C is copied such into the on-chip memory 700 that a memory start address of load module C is always located immediately after the end address of load module A. Load module B is copied such into the on-chip memory 700 that a memory start address of load module B always coincides with the memory start address of the on-chip memory 700 (here: start address 0).

After having downloaded load module A, load module B, and load module C in this order (initialization period), switching from load module A to load module B requires downloading 60KB, switching from load module B to load module C requires downloading 20KB, and switching from load module C to load module A requires downloading 40KB. Thus, a total load module data of 120KB is needed for one cycle (e.g., one scheduling period). Alternatively, the concatenation of load module A and load module C may be (not physically, but logically) interpreted as one load module. This means that the full concatenation of load module A and load module B has to be available regardless of whether only load module A or only load module C has to be executed. In this case, switching between load modules A and B and switching between load modules C and B, respectively, requires 60KB (i.e., switching from load module A to load module B requires downloading 60KB, switching from load module B to load module C requires downloading 60KB. Since load modules A and C are concatenated, there is no switch between load module A and load module C. Hence the total download size is 120 KB.

Fig. 8 shows a still further embodiment of storing load modules within an on-chip memory 800. Again, the on-chip memory 800 has a memory capacity of 120KB as indicated by reference numeral 810. The program/data corresponding to a task A is referred to as load module A. The program/data corresponding to a task B is referred to as load module B. The program/data corresponding to a task C is referred to as load module C. The location of load module A within the on-chip memory 800 is indicated by reference numeral 820, the location of load module B within the on-chip memory 800 is indicated by reference numeral 830, and the location of load module C within the on-chip memory 800 is indicated by reference numeral 840.

In the present embodiment, it is assumed that load module A is copied such into the on-chip memory 800 that a memory start address of load module A always coincides with the memory start address of the on-chip memory 800 (here: start address 0). Load module C is copied such into the on-chip memory 800 that a memory start address of load module C is always located immediately after the end address of load module A. Load module B is copied such into the on-chip memory 800 that a memory end address of load module B always coincides with the memory end address of the on-chip memory 800 (here: end address 120KB).

After having downloaded load module A, load module B, and load module C in this order (initialization period), switching from load module A to load module B requires downloading 30KB, switching from load module B to load module C requires downloading 30KB, and switching from load module C to load module A requires downloading 0KB. Thus, load module data of 60KB is needed for one cycle (e.g., one scheduling period). Since load modules A and C are logically concatenated, there is no switch between load module C and load module A. Hence, the total download size is 60KB. Generally, after two of the three load modules have been logically concatenated, the two load module download handling example explained earlier can be applied.

Now, regarding the second alternative (no sum of 2 out of 3 load modules is less than the total memory size), as an example the case is considered where 3 load modules are needed (in this order) in a scheduling period: load module A (size 60KB), load module B (size 80KB), and load module C (size 100KB).

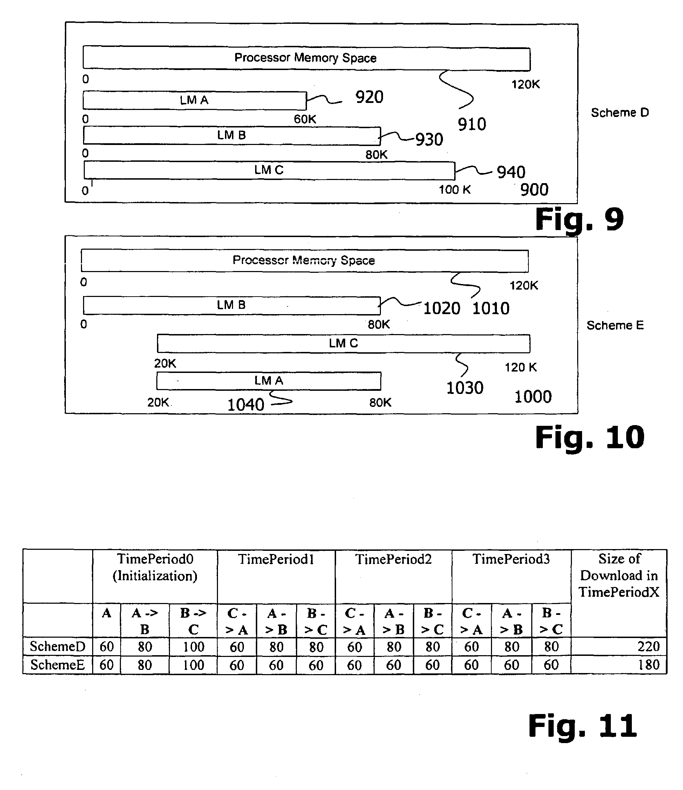

Fig. 9 shows an conventional approach of storing load modules within an on-chip memory 900. The on-chip memory 900 has a memory capacity of 120KB as indicated by reference numeral 910. The program/data corresponding to a task A is referred to as load module A. The program/data corresponding to a task B is referred to as load module B. The program/data corresponding to a task C is referred to as load module C. The location of load module A within the on-chip memory 900 is indicated by reference numeral 920, the location of load module B within the on-chip memory 900 is indicated by reference numeral 930, and the location of load module C within the on-chip memory 900 is indicated by reference numeral 940.

It is assumed that each load module is copied such into the on-chip memory 900 that a memory start address of the load module always coincides with the memory start address of the on-chip memory 900 (here: start address 0). After having downloaded load module A, load module B, and load module C in this order (initialization period), switching from load module A to load module B requires downloading 80KB, switching from load module B to load module C requires downloading 80KB, and switching from load module C to load module A requires downloading 60KB. Thus, load module data of 220KB is needed for one cycle (e.g., one scheduling period).

Fig. 10 shows an embodiment of storing load modules within an on-chip memory 1000. The on-chip memory 1000 has a memory capacity of 120KB as indicated by reference numeral 1010. The program/data corresponding to a task A is referred to as load module A. The program/data corresponding to a task B is referred to as load module B. The program/data corresponding to a task C is referred to as load module C. The location of load module B within the on-chip memory 1000 is indicated by reference numeral 1020, the location of load module C within the on-chip memory 1000 is indicated by reference numeral 1030, the location of load module A within the on-chip memory 1000 is indicated by reference numeral 1040.

Here, it is assumed that load module B is copied such into the on-chip memory 1000 that a memory start address of load module B always coincides with the memory start address of the on-chip memory 1000 (here: start address 0). Load module C is copied such into the on-chip memory 1000 that a memory end address of load module C always coincides with the end address of the on-chip memory (here: end address 120). Load module A is copied such into the on-chip memory 1000 that a memory start address of load module A always coincides with the memory start address of load module C (here: start address 20KB). After having downloaded load module A, load module B, and load module C in this order (initialization period), switching from load module A to load module B requires downloading 60KB, switching from load module B to load module C requires downloading 60KB, and switching from load module C to load module A requires downloading 60KB. Thus, load module data of 180KB is needed for one cycle (e.g., one scheduling period).

A comparison between the performance characteristics (download sizes needed) of the embodiments shown in Fig. 9 and Fig. 10 is summarized in Fig. 11. As may be gathered from Fig. 11, the embodiment illustrated in Fig. 10 significantly reduces the download volume compared to the scenario shown in Fig. 9 (180 KB vs. 220 KB).

According to one embodiment, that may be combined with any of the embodiments discussed above, in the on-chip memory 220 or in another place (see Fig. 1), a load module directory of active and valid load modules is maintained. For sake of simplicity, it is assumed that the number of maintained modules is 2 (load module A or LM1 and load module B or LM2). However, any number of load modules may be maintained. The load module directory is invalidated (initialized) at booting time. After this, both load module A and load module B are fully downloaded (with start addresses chosen based upon scheme C for example). Subsequently, if there is a request to download load module A or load module B, only "corrupted" parts (i.e., the overlapping region between load module A and load module B) are downloaded (or "repaired"). A load module is called active if it has already been completely downloaded once. A load module is called valid if it is active and no part of it is corrupted. It is possible that a load module is active but not valid, but a load module cannot be valid if it is not active.

Before starting a new load module download, a DSP (i.e., a multiple task processor 210) may check if the load module to be downloaded is already active by looking up the load module directory. Based upon the start and end address as well as the status of the load module (represented by, for example, active/valid flags assigned to the load module or other status indicators), the download is started to repair the corrupted parts. When there is a task requiring downloading a load module that is not active, the load module is fully downloaded to the requested address in the on-chip memory 220 (also called Tightly Coupled Memory, or TCM). The load module directory is updated after every dynamic download. This download may also be tied to a DMA callback action that registers the tasks present inside the downloaded dynamic load module with the execution platform of the multiple task processor 210.Once the DMA is completed, an interrupt may be raised to the digital signal processor. In response to that interrupt, the DSP may update the load module tables that it maintains internally. The invalidation of the other load modules should be done before the download is started for the load module of interest.

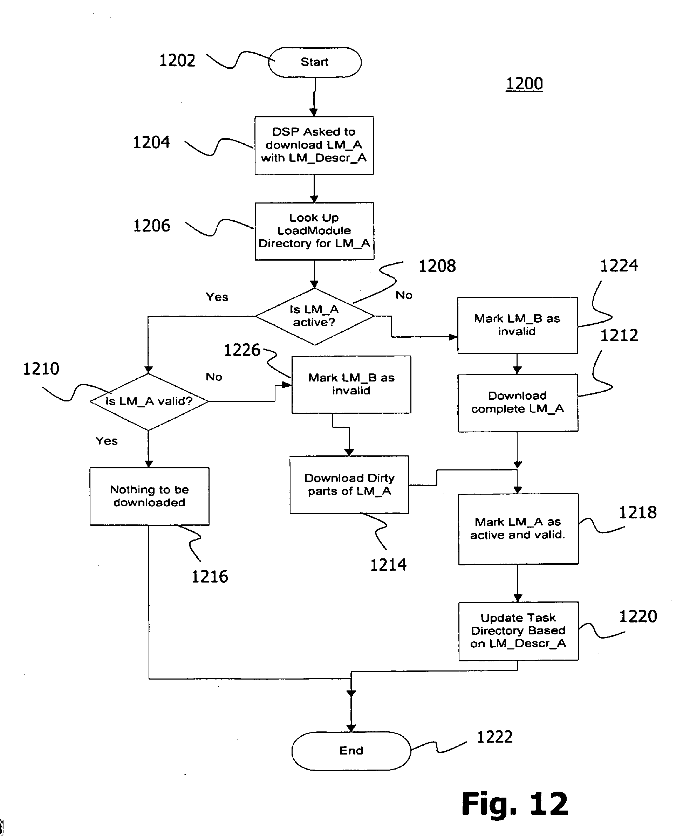

This process is reflected by the flow chart 1200 shown in Fig. 12. At step 1202, the process is started. At step 1204, a DSP which may realize the multiple task processor 210 of Fig. 1 is asked (e.g., by an application program) to download load module A having load module descriptor A. At step 1206, the DSP or a memory controller looks into the load module directory in order to obtain information about load module A. At step 1208, it is determined whether load module A is active. If it is determined that the load module A is not active, load module B is marked as invalid at step 1224 and the complete load module A is downloaded at step 1212. After this, at step 1218, load module A is e marked as active and valid.Then, at step 1220, the task directory is updated based on the load module descriptor of load module A, and the process is ended at step 1222.

If it is determined at step 1208 that load module A is active, then it is determined at step 1210 whether load module A is valid. If it is determined at step 1210 that load module A is valid, it is decided at step 1216 that nothing has to be downloaded, and the process is ended at step 1222. If, on the other hand, it is determined at step 1210 that load module A is not valid, then load module B is marked as invalid at step 1226 and the corrupted parts of load module A are downloaded at step 1214. Then, at step 1218, load module A is marked as active and valid. Next, at step 1220, the task directory is updated based on the load module descriptor of load module A, and the process is ended at step 1222. The situation is handled in an inversely manner if, at step 1204, it is asked to download load module B.

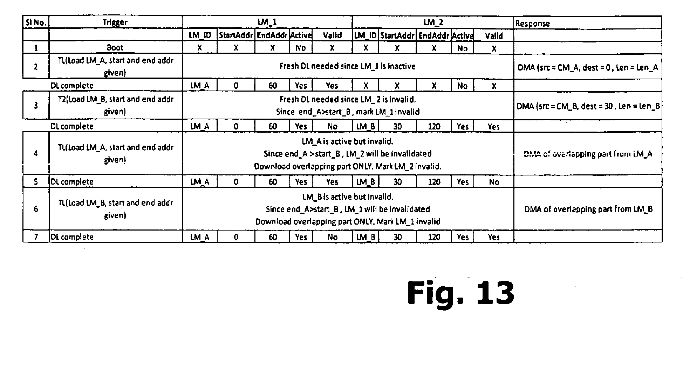

The process described above with reference to Fig. 12 is also reflected by Fig. 13 as a seven step procedure. In Fig. 13, the individual triggering events and the respective DMA responses are illustrated.

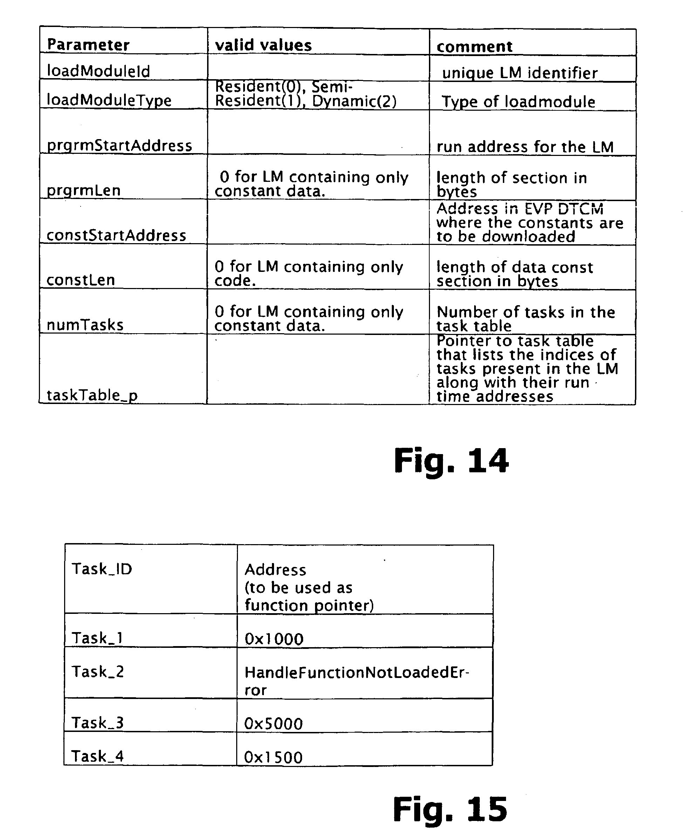

Fig. 14 shows an embodiment of a load module descriptor. Every load module may include a load module descriptor that may be associated with one or more (or each) load module. As an example, the load module descriptor may be stored (e.g., in the on-chip memory) together with the load module. Load module descriptor data may be used to create DMA descriptors that can be used to download the load module to the TCM.

The load module descriptor may, for example, be represented by the following data structure (the meaning of the data items is explained in the comment section of Fig. 14):
typedef struct
   {
   uint32_t loadModuleId;
   uint32_t loadModuleType;
   void* prgrmStartAddress;
   uint32_t prgrmLen;
   void* constStartAddress;
   uint32_t constLen;
   uint32_t numTasks;
   EVP_TaskMap_t* taskTable_p;
   EVP_LoadModuleDescriptor_t;
   }

Fig. 15 shows an embodiment of a task table which may be used (via a pointer) as an element of the load module descriptor shown in Fig. 14. The task table may be maintained by an execution platform (equivalent of an operating system) that executes on the DSP The task table comprises a list of the tasks that are included within the load module represented by the load module descriptor.

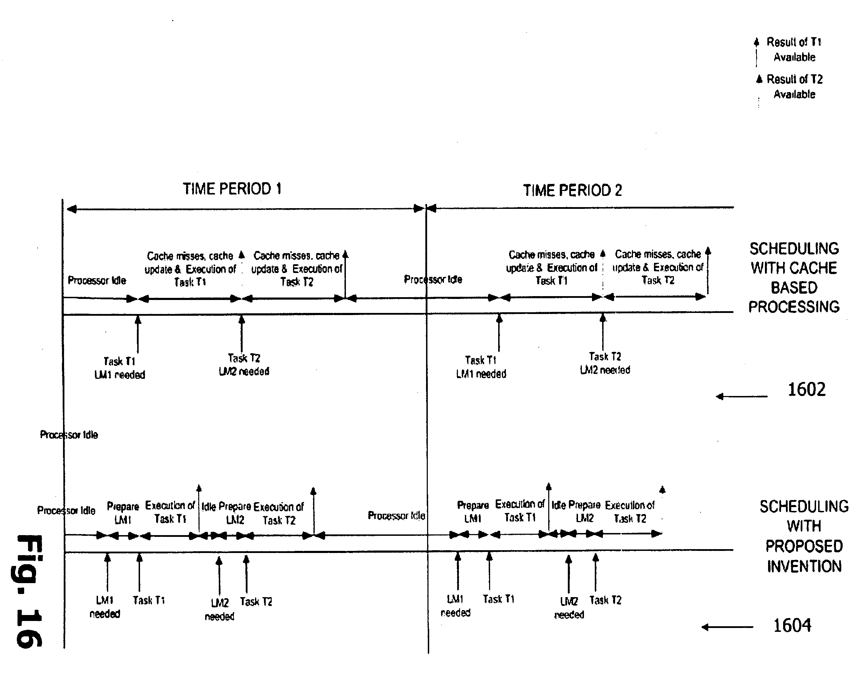

Fig. 16 shows a comparison between task execution times on two computing systems. Reference numeral 1602 shows a time chart for a computing system having a cache, and reference numeral 1604 for a computing system having no cache, but an on-chip memory management as explained above. It is assumed that in a time period (unit granularity for scheduling), two tasks are executed on the processor: Task T1 that needs load module 1 (LM1), and task T2 that needs load module 2 (LM2). It can be derived from Fig. 16 that the latency in the availability of task T1 and task T2 is decreased for computing system 1604. This decrease results from the fact that the load modules can be repaired before the corresponding task has to be executed (due to the decoupling of load module data download and task request), and due to the fact that only a reduced amount of load module data has to be downloaded. In contrast, in the cache based system, each task execution requires a load module data download which is done when the task is requested. Also, the size of downloaded load module data is not minimized here.

Task scheduling information available in advance may be used to optimize the performance of the memory management of the muitipie task processor (see reference numeral 210 in Fig. 1). That is, the order of the tasks to be executed and thus the corresponding order of load modules to be run may serve as a basis for determining which start addresses and end addresses should be used for the load modules in order to reduce the amount of downloaded load module data. In other words, information pertaining to the sequence in which the load modules are utilized on the multiple task processor along with their sizes may be used to optimally manage the on-chip memory of the multiple processor. This information is available in many multiple task processors since systems that can typically make use of the above embodiments may have very tight real time constraints and deadlines for the processing.

As has become apparent in the foregoing description, embodiments of the technique presented herein bring about several advantages. Specifically, a technique for optimal usage of the program/data memory is provided which is shared between multiple tasks. This technique allows reducing the size of the on-chip memory which may ultimately result in the reduction of the size of the die on which the multiple task processor is manufactured. This reduction is a requirement for mobile handsets and many other embedded systems. By reducing the volume of the load module data download, the traffic on memory buses is significantly reduced. This reduces the power consumption in the embedded system.

As a further advantage compared to other solutions, the download volume can be decreased. This decrease in download volume leads to lower download times, hence resulting in earlier availability of the result of a task, and significant less power consumption. As a consequence, it becomes for example possible to power down the multiple task processor into a low-power dissipation mode or to clock the multiple task processor at a lower speed leading to less power consumption in general.

By reducing the size of the download, the multiple task processor can be (more often) set into a low power mode which will reduce the power consumption in the device. Alternatively, or in addition, by reducing the size of the download, the multiple task processor can be (more often) clocked at a lower rate that will reduce the power consumption of the device.

Since most commercial multiple task processors do not use data and instruction cache as they execute out of on-chip memories, embodiments of the technique presented herein may be used for memory optimization on processors without cache memory (cache memory would require that the processor architecture is designed with a cache).

The embodiments may be implemented as software which is cheap to realize. Moreover, the multiple task processor may be aware and partly be responsible (shares memory management responsibility with the control processor) for its own memory management. In certain embodiments, only the size of the load modules may be used as input parameter for optimization of the on-chip memory management.

A further advantage of certain embodiments is the fact that the on-chip memory management does not lead to any uncertainty in load module execution time. Moreover, the on-chip memory update operation may be decoupled from accessing the memory by the multiple task processor. This approach allows that the memory update can be considered for the scheduling on the processor. The on-chip memory update can be performed when the processor load is low (these times are usually known to the control processor which is responsible for initiating the download of the correct load module for the task, so the control processor can initiate the memory updates at the right times).

Certain embodiments may not need hardware support which is for example needed for virtual memory, typically in the form of a Memory Management Unit (MMU). Still further, in certain embodiments an optimization can be used to place the load modules at optimum locations in the process memory space (on-chip memory) at compile and link time. By using the knowledge of scheduling on the multiple task processor, performance optimization is possible.

Moreover, the start/end addresses of the load modules may correspond to physical addresses of the on-chip memory. Still further, the on-chip memory may be a TCM comprising program tightly coupled memory (PCTM) and/or data tightly coupled memory (DTCM). Deterministic patterns in the scheduling of tasks on the processor may be used for on-chip memory optimization.

While the present invention has been described with respect to particular embodiments, those skilled in the art will appreciate the present invention is not limited to the specific embodiments described and illustrated herein. It is to be understood that this disclosure is only illustrative. Accordingly, it is intended that the invention be limited only by the scope of the claims appended hereto.

## Claims

1. A method for executing a task sequence on a system (200) comprising a multiple task processor (210) having an on-chip memory (220, 300, 400, 600, 700, 800, 900, 1000) and an external memory (230) connected to the multiple task processor (210),
the method comprising:
- transferring load module data from the external memory (230) into the on-chip memory (220) in order to generate a load module sequence within the on-chip memory (220), wherein a load module includes at least one of a program and data to be processed by the program, and wherein the generation of a load module of the load module sequence comprises the following processes: determining, based on respective on-chip start addresses and on-chip end addresses of the load modules of the load module sequence, based on a first indicator indicating whether the load module has already been completely loaded at least once into the on-chip memory (220), and based on a second indicator indicating whether at least a part of the load module, after having been completely loaded into the on-chip memory (220), is currently overwritten, which parts of the load module are currently stored within the on-chip memory (220), and transferring only load module data from the external memory (230) into the on-chip memory (220) for parts of the load module which are currently not stored within the on-chip memory (220), wherein the load module is completely loaded into the on-chip memory (220) if the first indicator is in a FALSE state or wherein the load module is partly loaded into the on-chip memory (220) if the first indicator is in a TRUE state and the second indicator is in a FALSE state, or wherein no part of the load module is loaded into the on-chip memory (220) if the first indicator and the second indicator are respectively in a TRUE state, wherein each load module of the load module sequence is generated within an individual address range of the on-chip memory (220) which is chosen in dependence on the load module sequence, and
- executing the task sequence by running the load module sequence.

2. The method according to claim 1,
wherein the address ranges of the load modules of the load module sequence are chosen such that the amount of load module data transferred from the external memory (230) into the on-chip memory (220) is minimized.

3. The method according to claim 1 or 2,
wherein at least one of on-chip start addresses and on-chip end addresses of the address ranges of the load modules are chosen depending on one or both of the size of the load modules and the order according to which the load modules are generated within the on-chip memory (220).

4. The method according to any one of claims 1 to 3,
wherein at least one of on-chip start addresses and on-chip end addresses of the load modules within the on-chip memory (220) are chosen such that as much address range of the on-chip memory (220) as possible is covered by the load modules.

5. The method According to any one of claims 1 to 4,
wherein at least one of on-chip start addresses and on-chip end addresses of the load modules within the on-chip memory (220) are chosen such that,
- in case that the sum of the data lengths of the load modules already generated within the on-chip memory (220) is smaller than the total data size of the on-chip memory (220), the address ranges of load module data of different load modules do not overlap with each other, or
- in case that the sum of the data lengths of the load modules already generated within the on-chip memory (220) is larger than the total data size of the on-chip memory (220), the whole address range of the on-chip memory is covered by load module data of the load modules.

6. The method according to any one of claims 1 to 5,
further comprising:
successively generating load modules within the on-chip memory (220), wherein an on-chip start address assigned to a load module currently generated within the on-chip memory (220) is located immediately after the on-chip end address of a load module previously generated, wherein, as soon as the sum of the data lengths of the load modules already generated within the on-chip memory (220) and of a further load module to be generated exceeds the total data size of the on-chip memory (220), assigning an on-chip end address to the further load module which coincides with the highest address of the on-chip memory (220).

7. The method according to claim 6,
wherein a on-chip start address assigned to a first load module generated within the on-chip memory (220) coincides with the lowest address of the on-chip memory (220).

8. The method according to any one of claims 1 to 7,
wherein determining which parts of the load module are currently stored within the on-chip memory and/or which module data is to be downloaded is at least partly controlled by the multiple task processor.

9. The method according to any one of claims 1 to 8, wherein the multiple task processor (210) is a Digital Signal Processor.

10. A computer program product comprising program code portions for performing the steps of any one of claims 1 to 9 when the computer program product is executed on a computing device.

11. The computer program product of claim 10, stored on a computer-readable recording medium.

12. A computing system (200) comprising a multiple task processor (210) having an on-chip memory (220, 300, 400, 600, 700, 800, 900, 1000) and further comprising an external memory (230) connected to the multiple task processor (210),
the computing system (200) being adapted to:
- transfer load module data from the external memory (230) into the on-chip memory (220) in order to generate a load module sequence within the on-chip memory (220), wherein a load module includes at least one of a program and data to be processed by the program, and wherein the generation of a load module of the load module sequence comprises the following processes: determining, based on respective on-chip start addresses and on-chip end addresses of the load modules of the load module sequence, based on a first indicator indicating whether the load module has already been completely loaded at least once into the on-chip memory (220), and based on a second indicator indicating whether at least a part of the load module, after having been completely loaded into the on-chip memory (220), is currently overwritten, which parts of the load module are currently stored within the on-chip memory, and transferring only load module data from the external memory (230) into the on-chip memory (220) for parts of the load module which are currently not stored within the on-chip memory (220), wherein the load module is completely loaded into the on-chip memory (220) if the first indicator is in a FALSE state, or wherein the load module is partly loaded into the on-chip memory (220) if the first indicator is in a TRUE state and the second indicator is in a FALSE state or wherein no part of the load module is loaded into the on-chip memory (220) if the first indicator and the second indicator are respectively in a TRUE state, and
- execute the task sequence by executing the load module sequence,
wherein
the computing system (200) is further adapted to generate each load module of the load module sequence within an individual address range of the on-chip memory (220) which is chosen in dependence on the load module sequence.

13. The computing system (200) according to claim 12,
the computing system (200) being adapted to choose the address ranges of the load modules of the load module sequence such that the amount of load module data transferred from the external memory (230) into the on-chip memory (220) is minimized.

14. The computing system according to claim 12 or 13,
the computing system (200) being adapted to choose at least one of on-chip start addresses and on-chip end addresses of the address ranges of the load modules depending on one or both of the size of the load modules and on the order according to which the load modules are generated within the on-chip memory (220).

15. The computing system (200) according to any one of claims 12 to 14,
the computing system (200) being adapted to choose at least one of on-chip start addresses and on-chip end addresses of the load modules within the on-chip memory (220) such that as much address range of the on-chip memory (220) as possible is covered by the load modules.

16. The computing system (200) according to any one of claims 12 to 14, the computing system (200) being adapted to choose at least one of on-chip start addresses and on-chip end addresses of the load modules within the on-chip memory (220) such that,
- in case that the sum of the data lengths of the load modules already generated within the on-chip memory (220) is smaller than the total data size of the on-chip memory (220), the address ranges of load module data of different load modules do not overlap with each other, or
- in case that the sum of the data lengths of the load modules already generated within the on-chip memory (220) is larger than the total data size of the on-chip memory (220), the whole address range of the on-chip memory (220) is covered by load module data of the load modules.

17. The computing system (200) according to any one of claims 12 to 16, the computing system (200) being adapted to successively generate load modules within the on-chip memory (220), wherein an on-chip start address assigned to a load module currently generated within the on-chip memory (220) is located immediately after the on-chip end address of a load module previously generated, wherein, as soon as the sum of the data lengths of the load modules already generated within the on-chip memory (220) and of a further load module to be generated exceeds the total data size of the on-chip memory (220), assigning an on-chip end address to the further load module which coincides with the highest address of the on-chip memory (220).

18. The computing system (200) according to claim 17, wherein an on-chip start address assigned to a first load module generated within the on-chip memory (220) coincides with the lowest address of the on-chip memory (220).

19. The computing system (200) according to any one of claims 12 to 18, wherein the multiple task processor (210) is adapted to at least partly control which parts of the load modules are currently stored within the on-chip memory (220) and/or which kind of module data is to be downloaded.

20. The computing system (200) according to any one of claims 12 to 19, wherein the multiple task processor (210) is a Digital Signal Processor.

## Patentansprüche

1. Verfahren zur Ausführung einer Aufgabenfolge auf einem System (200), das einen Mehrfachaufgaben-Prozessor (210) mit einem chipinternen Speicher (220, 300, 400, 600, 700, 800, 900, 1000) und einen externen Speicher (230) umfasst, der mit dem Mehrfachaufgaben-Prozessor (210) verbunden ist,
wobei das Verfahren umfasst:
- Übertragen von Lademoduldaten vom externen Speicher (230) in den chipinternen Speicher (220), um eine Lademodulfolge innerhalb des chipinternen Speichers (220) zu erzeugen, wobei ein Lademodul mindestens eines von einem Programm und Daten umfasst, die durch das Programm verarbeitet werden sollen, und wobei die Erzeugung eines Lademoduls der Lademodulfolge die folgenden Prozesse umfasst: Bestimmen basierend auf jeweiligen chipinternen Startadressen und chipinternen Endadressen der Lademodule der Lademodulfolge, basierend auf einem ersten Indikator, der anzeigt, ob das Lademodul bereits mindestens einmal vollständig in den chipinternen Speicher (220) geladen wurde, und basierend auf einem zweiten Indikator, der anzeigt, ob mindestens ein Teil des Lademoduls, nachdem es vollständig in den chipinternen Speicher (220) geladen wurde, gegenwärtig überschrieben wird, welche Teile des Lademoduls gegenwärtig innerhalb des chipinternen Speichers (220) gespeichert sind, und nur Übertragen von Lademoduldaten vom externen Speicher (230) in den chipinternen Speicher (220) für Teile des Lademoduls, welche gegenwärtig nicht innerhalb des chipinternen Speichers (220) gespeichert sind, wobei das Lademodul vollständig in den chipinternen Speicher (220) geladen ist, wenn der erste Indikator in einem FALSE-Zustand ist, oder wobei das Lademodul teilweise in den chipinternen Speicher (220) geladen ist, wenn der erste Indikator in einem TRUE-Zustand ist und der zweite Indikator in einem FALSE-Zustand ist, oder wobei kein Teil des Lademoduls in den chipinternen Speicher (220) geladen ist, wenn der erste Indikator und der zweite Indikator jeweils in einem TRUE-Zustand sind, wobei jedes Lademodul der Lademodulfolge innerhalb eines individuellen Adressbereichs des chipinternen Speichers (220) erzeugt wird, welcher in Abhängigkeit von der Lademodulfolge gewählt wird, und
- Ausführen der Aufgabenfolge durch Ausführen der Lademodulfolge.

2. Verfahren nach Anspruch 1,
wobei die Adressbereiche der Lademodule der Lademodulfolge derart gewählt werden, dass die Menge von Lademoduldaten, die vom externen Speicher (230) in den chipinternen Speicher (220) übertragen werden, minimiert wird.

3. Verfahren nach Anspruch 1 oder 2,
wobei mindestens eine von chipinternen Startadressen und chipinternen Endadressen der Adressbereiche der Lademodule in Abhängigkeit von einem oder beiden von der Größe der Lademodule und der Reihenfolge gewählt wird, gemäß welcher die Lademodule innerhalb des chipinternen Speichers (220) erzeugt werden.

4. Verfahren nach einem der Ansprüche 1 bis 3,
wobei mindestens eine von chipinternen Startadressen und chipinternen Endadressen der Lademodule innerhalb des chipinternen Speichers (220) derart gewählt wird, dass so viel Adressbereich des chipinternen Speichers (220) als möglich durch die Lademodule belegt wird.

5. Verfahren nach einem der Ansprüche 1 bis 4,
wobei mindestens eine von chipinternen Startadressen und chipinternen Endadressen der Lademodule innerhalb des chipinternen Speichers (220) derart gewählt wird, dass
- die Adressbereiche von Lademoduldaten von verschiedenen Lademodulen einander nicht überlappen, falls die Summe der Datenlängen der innerhalb des chipinternen Speichers (220) bereits erzeugten Lademodule kleiner als die Gesamtdatengröße des chipinternen Speichers (220) ist, oder
- der gesamte Adressbereich des chipinternen Speichers durch Lademoduldaten der Lademodule belegt wird, falls die Summe der Datenlängen der innerhalb des chipinternen Speichers (220) bereits erzeugten Lademodule größer als die Gesamtdatengröße des chipinternen Speichers (220) ist.

6. Verfahren nach einem der Ansprüche 1 bis 5,
ferner umfassend:
fortlaufendes Erzeugen von Lademodulen innerhalb des chipinternen Speichers (220), wobei eine chipinterne Startadresse, die einem Lademodul zugeordnet ist, das innerhalb des chipinternen Speichers (220) gerade erzeugt wird, unmittelbar nach der chipinternen Endadresse eines vorher erzeugten Lademoduls angeordnet wird, wobei, sobald die Summe der Datenlängen der innerhalb des chipinternen Speichers (220) bereits erzeugten Lademodule und eines weiteren, zu erzeugenden Lademoduls die Gesamtdatengröße des chipinternen Speichers (220) überschreitet, dem weiteren Lademodul eine chipinterne Endadresse zugeordnet wird, die mit der höchsten Adresse des chipinternen Speichers (220) übereinstimmt.

7. Verfahren nach Anspruch 6,
wobei eine chipinterne Startadresse, die einem ersten, innerhalb des chipinternen Speichers (220) erzeugten Lademodul zugeordnet ist, mit der niedrigsten Adresse des chipinternen Speichers (220) übereinstimmt.

8. Verfahren nach einem der Ansprüche 1 bis 7,
wobei das Bestimmen, welche Teile des Lademoduls gegenwärtig innerhalb des chipinternen Speichers gespeichert sind und/oder welche Moduldaten heruntergeladen werden sollen, wenigstens teilweise durch den Mehrfachaufgaben-Prozessor gesteuert wird.

9. Verfahren nach einem der Ansprüche 1 bis 8, wobei der Mehrfachaufgaben-Prozessor (210) ein Digitalsignalprozessor ist.

10. Computerprogrammprodukt, umfassend Programmcodeabschnitte zum Ausführen der Schritte nach einem der Ansprüche 1 bis 9, wenn das Computerprogrammprodukt auf einem oder mehreren Rechengeräten ausgeführt wird.

11. Computerprogramm nach Anspruch 10, gespeichert auf einem computerlesbaren Aufzeichnungsmedium.

12. Computersystem (200), umfassend einen Mehrfachaufgaben-Prozessor (210) mit einem chipinternen Speicher (220, 300, 400, 600, 700, 800, 900, 1000) und ferner umfassend einen externen Speicher (230), der mit dem Mehrfachaufgaben-Prozessor (210) verbunden ist, wobei das Computersystem (200) ausgelegt ist zum:
- Übertragen von Lademoduldaten vom externen Speicher (230) in den chipinternen Speicher (220), um eine Lademodulfolge innerhalb des chipinternen Speichers (220) zu erzeugen, wobei ein Lademodul mindestens eines von einem Programm und Daten umfasst, die durch das Programm verarbeitet werden sollen, und wobei die Erzeugung eines Lademoduls der Lademodulfolge die folgenden Prozesse umfasst: Bestimmen basierend auf jeweiligen chipinternen Startadressen und chipinternen Endadressen der Lademodule der Lademodulfolge, basierend auf einem ersten Indikator, der anzeigt, ob das Lademodul bereits mindestens einmal vollständig in den chipinternen Speicher (220) geladen wurde, und basierend auf einem zweiten Indikator, der anzeigt, ob mindestens ein Teil des Lademoduls, nachdem es vollständig in den chipinternen Speicher (220) geladen wurde, gegenwärtig überschrieben wird, welche Teile des Lademoduls gegenwärtig innerhalb des chipinternen Speichers gespeichert sind, und nur Übertragen von Lademoduldaten vom externen Speicher (230) in den chipinternen Speicher (220) für Teile des Lademoduls, welche gegenwärtig nicht innerhalb des chipinternen Speichers (220) gespeichert sind, wobei das Lademodul vollständig in den chipinternen Speicher (220) geladen ist, wenn der erste Indikator in einem FALSE-Zustand ist, oder wobei das Lademodul teilweise in den chipinternen Speicher (220) geladen ist, wenn der erste Indikator in einem TRUE-Zustand ist und der zweite Indikator in einem FALSE-Zustand ist, oder wobei kein Teil des Lademoduls in den chipinternen Speicher (220) geladen ist, wenn der erste Indikator und der zweite Indikator jeweils in einem TRUE-Zustand sind, und
- Ausführen der Aufgabenfolge durch Ausführen der Lademodulfolge,
wobei
das Computersystem (200) ferner so ausgelegt ist, dass es jedes Lademodul der Lademodulfolge innerhalb eines individuellen Adressbereichs des chipinternen Speichers (220) erzeugt, welcher in Abhängigkeit von der Lademodulfolge gewählt wird.

13. Computersystem (200) nach Anspruch 12,
wobei das Computersystem (200) so ausgelegt ist, dass es die Adressbereiche der Lademodule der Lademodulfolge derart wählt, dass die Menge von Lademoduldaten, die vom externen Speicher (230) in den chipinternen Speicher (220) übertragen werden, minimiert wird.

14. Computersystem nach Anspruch 12 oder 13,
wobei das Computersystem (200) so ausgelegt ist, dass es mindestens eine von chipinternen Startadressen und chipinternen Endadressen der Adressbereiche der Lademodule in Abhängigkeit von einem oder beiden von der Größe der Lademodule und der Reihenfolge wählt, gemäß welcher die Lademodule innerhalb des chipinternen Speichers (220) erzeugt werden.

15. Computersystem (200) nach einem der Ansprüche 12 bis 14,
wobei das Computersystem (200) so ausgelegt ist, dass es mindestens eine von chipinternen Startadressen und chipinternen Endadressen der Lademodule innerhalb des chipinternen Speichers (220) derart wählt, dass so viel Adressbereich des chipinternen Speichers (220) als möglich durch die Lademodule belegt wird.

16. Computersystem (200) nach einem der Ansprüche 12 bis 14,
wobei das Computersystem (200) so ausgelegt ist, dass es mindestens eine von chipinternen Startadressen und chipinternen Endadressen der Lademodule innerhalb des chipinternen Speichers (220) derart wählt, dass
- die Adressbereiche von Lademoduldaten von verschiedenen Lademodulen einander nicht überlappen, falls die Summe der Datenlängen der innerhalb des chipinternen Speichers (220) bereits erzeugten Lademodule kleiner als die Gesamtdatengröße des chipinternen Speichers (220) ist, oder
- der gesamte Adressbereich des chipinternen Speichers (220) durch Lademoduldaten der Lademodule belegt wird, falls die Summe der Datenlängen der innerhalb des chipinternen Speichers (220) bereits erzeugten Lademodule größer als die Gesamtdatengröße des chipinternen Speichers (220) ist.

17. Computersystem (200) nach einem der Ansprüche 12 bis 16,
wobei das Computersystem (200) so ausgelegt ist, dass es fortlaufend Lademodule innerhalb des chipinternen Speichers (220) erzeugt, wobei eine chipinterne Startadresse, die einem Lademodul zugeordnet ist, das innerhalb des chipinternen Speichers (220) gerade erzeugt wird, unmittelbar nach der chipinternen Endadresse eines vorher erzeugten Lademoduls angeordnet wird, wobei, sobald die Summe der Datenlängen der innerhalb des chipinternen Speichers (220) bereits erzeugten Lademodule und eines weiteren, zu erzeugenden Lademoduls die Gesamtdatengröße des chipinternen Speichers (220) überschreitet, dem weiteren Lademodul eine chipinterne Endadresse zugeordnet wird, die mit der höchsten Adresse des chipinternen Speichers (220) übereinstimmt.

18. Computersystem (200) nach Anspruch 17,
wobei eine chipinterne Startadresse, die einem ersten, innerhalb des chipinternen Speichers (220) erzeugten Lademodul zugeordnet ist, mit der niedrigsten Adresse des chipinternen Speichers (220) übereinstimmt.

19. Computersystem (200) nach einem der Ansprüche 12 bis 18,
wobei der Mehrfachaufgaben-Prozessor (210) so ausgelegt ist, dass er wenigstens teilweise steuert, welche Teile der Lademodule gegenwärtig innerhalb des chipinternen Speichers (220) gespeichert sind und/oder welche Art von Moduldaten heruntergeladen werden soll.

20. Computersystem (200) nach einem der Ansprüche 12 bis 19, wobei der Mehrfachaufgaben-Prozessor (210) ein Digitalsignalprozessor ist.

## Revendications

1. Procédé pour exécuter une séquence de tâches sur un système (200) comprenant un processeur de tâches multiples (210) ayant une mémoire sur puce (220,300,400,600,700,800,900,1000) et une mémoire externe (230) connectée au processeur de tâches multiples (210), le procédé comprenant de :
- transférer des données de module de charge à partir de la mémoire externe (230) sur la mémoire sur puce (220) de manière à générer une séquence de module de charge à l'intérieur de la mémoire sur puce (220), dans lequel un module de charge inclut au moins un d'un programme et de données à traiter par le programme, et dans lequel la génération d'un module de charge de la séquence de module de charge comprend les processus suivants : déterminer, sur la base des adresses de début sur puce et des adresses de fin sur puce respectives des modules de charge de la séquence de module de charge, sur la base d'un premier indicateur indiquant si le module de charge a déjà été complètement chargé au moins une fois dans la mémoire sur puce (220), et sur la base d'un second indicateur indiquant si au moins une partie du module de charge, après avoir été complètement chargé dans la mémoire sur puce (220), est actuellement en train d'être écrasée, lesquelles parties du module de charge sont actuellement mémorisées à l'intérieur de la mémoire sur puce (220), et transférer seulement les données de module de charge de la mémoire externe (230) dans la mémoire sur puce (220) pour les parties du module de charge qui ne sont actuellement par mémorisées dans la mémoire sur puce (220) si le premier indicateur est dans un état FALSE ou dans lequel le module de charge est partiellement chargé dans la mémoire sur puce (220) si le premier indicateur est dans un état TRUE et le second indicateur est dans un état FALSE, ou dans lequel aucune partie du module de charge n'est chargée dans la mémoire sur puce (220) si le premier indicateur et le second indicateur sont respectivement dans un état TRUE, dans lequel chaque module de charge de la séquence de module de charge est générée à l'intérieur d'une plage d'adresses individuelles de la mémoire sur puce (220) qui est choisi en fonction de la séquence de module de charge, et
- exécuter la séquence de tâches en exécutant la séquence de module de charge.

2. Procédé selon la revendication 1, dans lequel les plages d'adresses des modules de charge de la séquence de module de charge sont choisies de telle sorte que la quantité de données de module de charge transférées de la mémoire externe (230) dans la mémoire sur puce (220) soit minimisée.

3. Procédé selon la revendication 1 ou 2, dans lequel au moins une des adresses de début sur puce et des adresses de fin sur puce des plages d'adresses des modules de charge sont choisies en fonction d'un ou des deux de la taille des modules de charge et de l'ordre selon lequel les modules de charge sont générés à l'intérieur de la mémoire sur puce (220).

4. Procédé selon une quelconque des revendications 1 à 3, dans lequel au moins une des adresses de début sur puce et des adresses de fin sur puce des modules de charge à l'intérieur de la mémoire sur puce (220) sont choisies de telle sorte que la plus grande partie possible de la plage d'adresses de mémoire sur puce (220) soit couverte par les modules de charge.

5. Procédé selon une quelconque des revendications 1 à 4, dans lequel au moins une des adresses de début sur puce et des adresses de fin sur puce des modules de charge à l'intérieur de la mémoire sur puce (220) sont choisis de telle sorte que,
- au cas où la somme des longueurs de données des modules de charge déjà générés à l'intérieur de la mémoire sur puce (220) est plus petite que la taille de données totale de la mémoire sur puce (220), les plages d'adresses des données de module de charge de différentes modules de charge ne se superposent pas les unes aux autres, ou
- au cas où la somme des longueurs de données des modules de charge déjà générés à l'intérieur de la mémoire sur puce (220) est plus grande que la taille de données totale de la mémoire sur puce (220), la plage d'adresses totale de la mémoire sur puce est couverte par les données de module de charge des modules de charge.

6. Procédé selon une quelconque des revendications 1 à 5, comprenant en outre de :
générer successivement des modules de charge à l'intérieur de la mémoire sur puce (220), dans lequel une adresse de début assignée à un module de charge actuellement généré à l'intérieur de la mémoire sur puce (220) est situé immédiatement après l'adresse de fin sur puce d'un module de charge généré précédemment, dans lequel, dès que la somme des longueurs de données des modules de charge déjà générés à l'intérieur de la mémoire sur puce (220) et d'un autre module de charge à générer excède la taille de données totale de la mémoire sur puce (220), assigner une adresse de fin sur puce à l'autre module de charge qui coïncide avec l'adresse la plus haute de la mémoire sur puce (220).

7. Procédé selon la revendication 6, dans lequel une adresse de début sur puce assignée à un premier module de charge généré à l'intérieur de la mémoire sur puce (220) coïncide avec l'adresse la plus basse de la mémoire sur puce (220).

8. Procédé selon une quelconque des revendications 1 à 7, dans lequel la détermination de quelles parties du module de charge sont actuellement mémorisées à l'intérieur de la mémoire sur puce et/ou quelles données de module doivent être téléchargées est au moins partiellement commandé par le processeur de tâches multiples.

9. Procédé selon une quelconque des revendications 1 à 8, dans lequel le processeur de tâches multiples (210) est un processeur de signaux numériques.

10. Produit de programme informatique comprenant des portions de code de programme pour mettre en oeuvre les étapes d'une quelconque des revendications 1 à 9 quand le produit de programme informatique est exécuté sur un dispositif informatique.

11. Produit de programme informatique selon la revendication 10, mémorisé sur un support d'enregistrement lisible par ordinateur.

12. Système informatique (200) comprenant un processeur de tâches multiples (210) ayant une mémoire sur puce (220,300,400,600,700,800,900,1000) et comprenant en outre une mémoire externe (230) connectée au processeur de tâches multiples (210), le système informatique (200) étant adapté afin de :
- transférer des données de module de charge à partir de la mémoire externe (230) sur la mémoire sur puce (220) de manière à générer une séquence de module de charge à l'intérieur de la mémoire sur puce (220), dans lequel un module de charge inclut au moins un d'un programme et de données à traiter par le programme, et dans lequel la génération d'un module de charge de la séquence de module de charge comprend les processus suivants : déterminer, sur la base des adresses de début sur puce et des adresses de fin sur puce respectives des modules de charge de la séquence de module de charge, sur la base d'un premier indicateur indiquant si le module de charge a déjà été complètement chargé au moins une fois dans la mémoire sur puce (220), et sur la base d'un second indicateur indiquant si au moins une partie du module de charge, après avoir été complètement chargé dans la mémoire sur puce (220), est actuellement en train d'être écrasée, lesquelles parties du module de charge sont actuellement mémorisées à l'intérieur de la mémoire sur puce (220), et transférer seulement les données de module de charge de la mémoire externe (230) dans la mémoire sur puce (220) pour les parties du module de charge qui ne sont actuellement par mémorisées dans la mémoire sur puce (220) si le premier indicateur est dans un état FALSE ou dans lequel le module de charge est partiellement chargé dans la mémoire sur puce (220) si le premier indicateur est dans un état TRUE et le second indicateur est dans un état FALSE, ou dans lequel aucune partie du module de charge n'est chargée dans la mémoire sur puce (220) si le premier indicateur et le second indicateur sont respectivement dans un état TRUE, et
- exécuter la séquence de tâches en exécutant la séquence de module de charge, dans lequel le système informatique (200) est en outre adapté afin de générer chaque module de charge de la séquence de module de charge à l'intérieur d'une plage d'adresses individuelles de la mémoire sur puce (220) qui est choisie en fonction de la séquence de module de charge.

13. Système informatique (200) selon la revendication 12, le système informatique (200) étant adapté afin de choisir les plages d'adresses de modules de charge de la séquence de module de charge de sorte que la quantité des données de module de charge transférées de la mémoire externe (230) dans la mémoire sur puce (220) soit minimisée.

14. Système informatique selon la revendication 12 ou 13, le système informatique (200) étant adapté afin de choisir au moins une d'adresses de début sur puce et d'adresses de fin sur puce des plages d'adresse des modules de charge en fonction d'un ou des deux de la taille de modules de charge et de l'ordre selon lequel les modules de charge sont générés à l'intérieur de la mémoire sur puce (220).

15. Système informatique (200) selon une quelconque des revendications 12 à 14, le système informatique (200) étant adapté afin de choisir au moins une adresses de début sur puce et des adresses de fin sur puce des modules de charge à l'intérieur de la mémoire sur puce (220) de sorte que la plus grande partie possible de la plage d'adresses de mémoire sur puce (220) soit couverte par les modules de charge.

16. Système informatique (200) selon une quelconque des revendications 12 à 14, le système informatique (200) étant adapté afin de choisir au moins une des adresses de début sur puce et des adresses de fin sur puce des modules de charge à l'intérieur de la mémoire sur puce (220), de sorte que,
- au cas où la somme des longueurs de données des modules de charge déjà générés à l'intérieur de la mémoire sur puce (220) est plus petite que la taille de données totale de la mémoire sur puce (220), les plages d'adresses des données de module de charge de différentes modules de charge ne se superposent pas les unes aux autres, ou
- au cas où la somme des longueurs de données des modules de charge déjà générés à l'intérieur de la mémoire sur puce (220) est plus grande que la taille de données totale de la mémoire sur puce (220), la plage d'adresses totale de la mémoire sur puce (220) est couverte par les données de module de charge des modules de charge.

17. Système informatique (200) selon une quelconque des revendications 12 à 16, le système informatique (200) étant adapté afin de générer successivement les modules de charge à l'intérieur de la mémoire sur puce (220), dans lequel une adresse de début sur puce assigné à un module de charge actuellement généré à l'intérieur de la mémoire sur puce (220) est située immédiatement après l'adresse de fin sur puce d'un module de charge précédemment généré, dans lequel, dès que la somme des longueurs de données des modules de charge déjà générés à l'intérieur de la mémoire sur puce (220) et d'un autre module de charge à générer excède la taille de données totale de la mémoire sur puce (220), assigner une adresse de fin sur puce à l'autre module de charge qui coïncide avec l'adresse la plus haute de la mémoire sur puce (220).

18. Système informatique (200) selon la revendication 17, dans lequel une adresse de début sur puce assignée à un premier module de charge généré à l'intérieur de la mémoire sur puce (220) coïncide avec l'adresse la plus basse de la mémoire sur puce (220).

19. Système informatique (200) selon une quelconque des revendications 12 à 18, dans lequel le processeur de tâches multiples (210) est adapté afin de commander au moins partiellement quelles parties des modules de charge sont actuellement mémorisées à l'intérieur de la mémoire sur puce (220) et/ou quel type de données de module doit être téléchargé.

20. Système informatique (200) selon une quelconque des revendications 12 à 19, dans lequel le processeur de tâches multiples (210) est un processeur de signaux numériques.
